# EUROPÄISCHE PATENTSCHRIFT

(11) **EP 1 828 997 B1**
(45) Veröffentlichungstag und Bekanntmachung des Hinweises auf die Patenterteilung: **05.03.2014**
(21) Anmeldenummer: 05805680.5
(22) Anmeldetag: 09.11.2005
(51) Int. Cl.: G07F 7/06

(54) **VERFAHREN UND VORRICHTUNG ZUR ANNAHME VON ELEKTRONISCHEN GERÄTEN**
METHOD AND DEVICE FOR ACCEPTING ELECTRONIC APPLIANCES
PROCÉDÉ ET DISPOSITIF DE RÉCEPTION D'APPAREILS ÉLECTRONIQUES

(30) Priorität: 03.12.2004 DE 102004058562
(43) Veröffentlichungstag der Anmeldung: 05.09.2007
(73) Patentinhaber: Deutsche Post AG, 53113 Bonn (DE)
(72) Erfinder: MAYER, Boris, 53129 Bonn (DE)
(74) Vertreter: Jostarndt, Hans-Dieter
(86) Internationale Anmeldenummer: PCT/EP2005/012007
(87) Internationale Veröffentlichungsnummer: WO 2006/058601

(56) Entgegenhaltungen:
- DE-A1- 10 045 964
- DE-U1-202004 012 043
- US-A- 5 408 079
- US-A1- 2001 042 055

## Beschreibung

Die Erfindung betrifft ein Verfahren zur Annahme von elektronischen Geräten an einer Annahmevorrichtung.

Die Erfindung betrifft ferner eine Vorrichtung zur Annahme von elektronischen Geräten.

Im Zuge eines steigenden Umweltbewusstseins werden Hersteller von elektronischen Geräten verstärkt dazu angehalten, von ihnen verkaufte Geräte zurückzunehmen und einer umweltgerechten Entsorgung oder Verwertung zuzuführen. Insbesondere nach Umsetzung der EU-Richtlinie 2002/96/EG über Elektro- und Elektronik-Altgeräte (WEEE) in nationales Recht in den Mitgliedsstaaten der Europäischen Union besteht ein Bedarf nach effektiven und flächendeckenden Systemen zur Rücknahme von elektronischen Geräten. Zu den davon betroffenen Geräten zählen neben größeren Haushaltsgeräten auch kleinere elektronische Geräte wie Mobiltelefone, Laptops, Videospielkonsolen, Sportausrüstungen mit elektronischen Bauteilen, medizinische Kleingeräte, Notebooks oder elektronische Notizbücher.

Zur Rücknahme von Großgeräten bietet sich die persönliche Abgabe des Gerätes bei einem Hersteller oder einer Sammelstation an. In einer kundenfreundlichen Alternative können die Geräte auch beim Kunden abgeholt werden. Für kleinere Geräte können neben der persönlichen Abgabe verschiedene weitere Verfahren zur Anwendung kommen. Bei der Rücknahme von Mobiltelefonen ist es beispielsweise bereits bekannt, dass diese vom Kunden in einen frei erhältlichen Briefumschlag eingebracht werden, der für den Kunden kostenlos zum Verkäufer/Hersteller des Mobiltelefons oder direkt zu einem Verwertungsunternehmen versandt wird. Dies stellt für den Kunden eine kostengünstige Art dar, sein Mobiltelefon der Entsorgung zuzuführen. Es ist jedoch mit dem Aufwand verbunden, einen Briefumschlag beispielsweise in einer Filiale eines Mobilfunkunternehmens abzuholen und den Umschlag mit dem Mobiltelefon gegebenenfalls in einem Briefkasten deponieren zu müssen. Auch wenn der Kunde den Briefumschlag in einer Filiale abgeben kann, stellt dies für ihn kein flexibles Verfahren dar, da innerstädtische Filialen verkehrstechnisch oftmals nur schwer zu erreichen sind. Es besteht daher der Bedarf nach einem System zur Rücknahme von elektronischen Geräten, das dem Kunden eine möglichst flexible und einfache Rückgabe ermöglicht.

Auf anderen Gebieten der Rücknahme von Gegenständen ist es wie beispielsweise im Bereich der Getränkebehälter bekannt, automatische Vorrichtungen zur Annahme leerer Behältnisse einzusetzen. Diese sind herkömmlicherweise in der Lage, verschiedene Arten von Behältnissen zu erkennen, gegebenenfalls zu sortieren und einen entsprechenden Pfandbetrag als Bargeld oder Wertmarke auszugeben.

Beispielsweise beschreibt die internationale Patentanmeldung WO 02/089078 A1 eine Vorrichtung zur Annahme von Verpackungen, bei der die Verpackung in eine Annahmestation eingebracht wird. Die Verpackung wird identifiziert und anhand der Identifikation ein Geldbetrag, eine Wertmarke und/oder ein Beleg ausgegeben. Die Vorrichtung umfasst ferner eine Sortiereinrichtung, welche die Verpackungen anhand der Identifikation zu verschiedenen Sortierstationen innerhalb der Vorrichtung transportiert.

Die Druckschrift US-A-5,408,079 beschreibt eine Warenartikel-Aufnahmevorrichtung und -verfahren, wobei der Warenartikel durch einen Strichcode auf dem Artikel ausgewiesen ist. Durch einen Strichcodeleser wird der Artikel identifiziert und im Gegenzug eine Zahlung von Geld oder Wertgutscheinen an den Benutzer veranlasst.

Die Druckschrift DE 100 45 964 offenbart einen Pfanddosen-Rücknahmeautomaten. Der Automat erkennt das Pfandgut durch einen aufgedruckten Strichcode und sammelt pfandpflichtiges Gut ein. Nach der Erkennung des Pfandgutes wird Geld oder ein Warengutschein ausgegeben. Das Pfandgut wird eingelagert.

Die Druckschrift DE 20 2004 012 043 beschreibt eine Wertstoff-Sammelvorrichtung. Die Sammelvorrichtung unterscheidet zwischen Pfandgut aus verschiedenen Materialien. Aufgrund eines Strichcodes oder andere Merkmale des Pfandgutes wird das Pfandgut klassifiziert, und der Pfandwert wird ausgezahlt. Das Pfandgut wird anschließend zerkleinert.

Die Druckschrift US 2001/042055A1 offenbart eine Paketstation zum automatischen Einliefern oder Ausgeben von Postpaketen oder ähnlichem. Das System nimmt Postsendungen an, wobei die Adresse durch einen Klarschriftleser oder durch einen Kundenterminal mit Tastatur und Bildschirm durch den Kunden eingegeben wird.

Aufgabe der Erfindung ist es, ein Verfahren und eine Vorrichtung zur Annahme von elektronischen Geräten eines Kunden bereitzustellen, das sowohl dem Kunden als auch dem Hersteller eine möglichst einfache und flexible Rückgabe/Rücknahme ermöglicht.

Erfindungsgemäß wird diese Aufgabe durch ein Verfahren mit den Merkmalen des unabhängigen Anspruches 1 gelöst. Vorteilhafte Weiterbildungen des Verfahrens ergeben sich aus den Unteransprüchen 2-17. Die Aufgabe wird ferner durch eine Vorrichtung nach Anspruch 18 gelöst. Vorteilhafte Ausführungsformen der Vorrichtung ergeben sich ebenfalls aus den Unteransprüchen 19-29.

Das erfindungsgemäße Verfahren zur Annahme von elektronischen Geräten an einer Annahmevorrichtung umfasst verschiedene Schritte. Das Verfahren sieht vor, dass durch ein Detektorsystem in Verbindung mit der Vorrichtung eine Erkennung des Gerätes durchgeführt wird. Vorzugsweise wird das elektronische Gerät zur Erkennung in das Gehäuse der Vorrichtung eingebracht. Nach Erkennung des Gerätes wird dem Gerät durch ein Rechenmittel eine Empfängeradresse zugeordnet und diese auf ein Adressmittel in Verbindung mit dem Gerät aufgebracht. Die Empfängeradresse ist vorzugsweise in einer Datenbank gespeichert und einem Gerätehersteller und/oder einem Gerätetyp zugeordnet. Das Gerät wird aus der Vorrichtung entnommen und zu der Empfängeradresse transportiert.

Die Erkennung des Gerätes durch das Detektorsystem kann mit verschiedenen Verfahren erfolgen. Beispielsweise kann die Erkennung über das optische Erfassen eines auf dem Gerät befindlichen Barcodes oder über das Auslesen eines am oder im Gerät befindlichen RFID-Transponders erfolgen. Die Erkennung kann in einem einfachen Ausführungsbeispiel ferner über die Auswertung einer manuellen Eingabe durch einen Kunden erfolgen oder es wird in einem optischen Erkennungsverfahren ein Bild des Gerätes erzeugt und ein Vergleich mit Bildern elektronischer Geräte in einer Datenbank durchgeführt.

In einem besonders bevorzugten Ausführungsbeispiel der Erfindung wird das elektronische Gerät in der Vorrichtung in eine Versandverpackung eingebracht, die ein Adressmittel aufweist, auf welchem die Empfängeradresse aufgebracht wird. Dabei kann es sich als zweckmäßig erweisen, mehrere elektronische Geräte mit der gleichen zugeordneten Empfängeradresse in eine gemeinsame Versandverpackung einzubringen.

Nach der Annahme eines elektronischen Gerätes erzeugt die Vorrichtung vorzugsweise einen Beleg und gibt diesen über ein Ausgabemittel aus. Wird dem Kunden für die Rückgabe eines elektronischen Gerätes ein Geldbetrag erstattet, weist die Vorrichtung dazu ein Ausgabemitel auf, welches den Betrag nach Annahme eines elektronischen Gerätes ausgibt. Der Geldbetrag kann beispielsweise als Bargeld, Wertmarke oder Gutschrift auf dem Konto eines Kunden ausgegeben werden. Die Gutschrift des Geldbetrages auf dem Konto eines Kunden erfolgt vorzugsweise über eine zentrale Verwaltungseinheit in Verbindung mit der Vorrichtung.

Die Erfindung umfasst ferner eine Vorrichtung zur Annahme von elektronischen Geräten, welche ein Gehäuse mit einer Annahmeöffnung umfasst, wobei die Annahmeöffnung in Verbindung mit einem Detektorsystem steht, das Mittel zur Erkennung des Gerätes aufweist. Die Vorrichtung weist ferner eine Datenbank und Rechenmittel in Verbindung mit dem Detektorsystem zur Bestimmung einer Empfängeradresse und Zuordnung der Empfängeradresse zu dem Gerät auf. Sie umfasst außerdem Mittel zum Aufbringen der Empfängeradresse auf ein Adressmittel in Verbindung mit dem Gerät. Die Vorrichtung weist darüber hinaus Eingabemitel zur Eingabe von Informationen durch einen Nutzer, Anzeigemittel zur Anzeige von Informationen für einen Nutzer, Ausgabemittel für die Ausgabe eines Beleges und Mittel zur Ausgabe eines Geldbetrages auf. Die Vorrichtung steht zweckmäßigerweise in Verbindung mit einer zentralen Verwaltungseinheit.

In einem besonders bevorzugten Ausführungsbeispiel der Erfindung ist die Vorrichtung in eine elektronische Paketfachanlage mit einem oder mehreren verschließbaren Aufbewahrungsfächern integriert ist und das elektronische Gerät wird in ein Aufbewahrungsfach der Paketfachanlage eingebracht.

Das Detektorsystem kann verschiedene Mittel zur Erkennung eines elektronischen Gerätes aufweisen. Beispielsweise kann das Detektorsytsem einen oder mehrere Scanner zum Einlesen eines Barcodes oder Mittel zum Auslesen eines RFID-Transponders umfassen. Vorzugsweise umfasst das Detektorsystem ferner optische Mittel zum Erfassen eines Bildes des Gerätes und Mittel zum Vergleich eines erfassten Bildes eines Gerätes mit in der Datenbank gespeicherten Bildern von elektronischen Geräten.

In einem besonders bevorzugten Ausführungsbeispiel der Erfindung umfasst die Vorrichtung Mittel zum Einbringen eines elektronischen Gerätes in eine Versandverpackung. Bei der Versandverpackung handelt es sich vorzugsweise um einen Briefumschlag oder ein Paket. Die Vorrichtung kann ferner Mittel zum Sammeln von mehreren elektronischen Geräten mit der gleichen zugeordneten Empfängeradresse in einer gemeinsamen Versandverpackung aufweisen.

Das erfindungsgemäße Verfahren hat in Verbindung mit der zugehörigen Vorrichtung den wesentlichen Vorteil, dass es für den Kunden eine sehr einfache Möglichkeit bietet, elektronische Geräte der Entsorgung oder Verwertung zuzuführen. Das Verfahren hat ferner den Vorteil, dass die Geräte mehrerer Hersteller an mehreren gemeinsamen Vorrichtungen angenommen werden können, ohne dass jeder Hersteller ein eigenes Sammelsystem einrichten muss.

Die Vorrichtungen sind vorzugsweise an verschiedenen gut zugänglichen Orten aufgestellt, so dass der Kunde flexibel wählen oder sogar spontan entscheiden kann, ein elektronisches Gerät einzuliefern. Da zur Annahme eines Gerätes vom Kunden keine Versandverpackung und keine Kenntnis der Herstelleradresse erforderlich sind, kann der Kunde das Gerät ohne Aufwand in die Vorrichtung einliefern.

Durch die Verbindung mit einer zentralen Verwaltungseinheit können ferner Informationen über anzunehmende Geräte in der Datenbank aktualisiert und der Betrieb der Vorrichtung an sich verändernde Anforderungen angepasst werden. Die Vorrichtung ermöglicht aufgrund der flexiblen Zuordnung von Empfängeradressen ferner den direkten Versand zu verschiedenen Herstelllern, Verwertungsunternehmen oder Zwischenstationen.

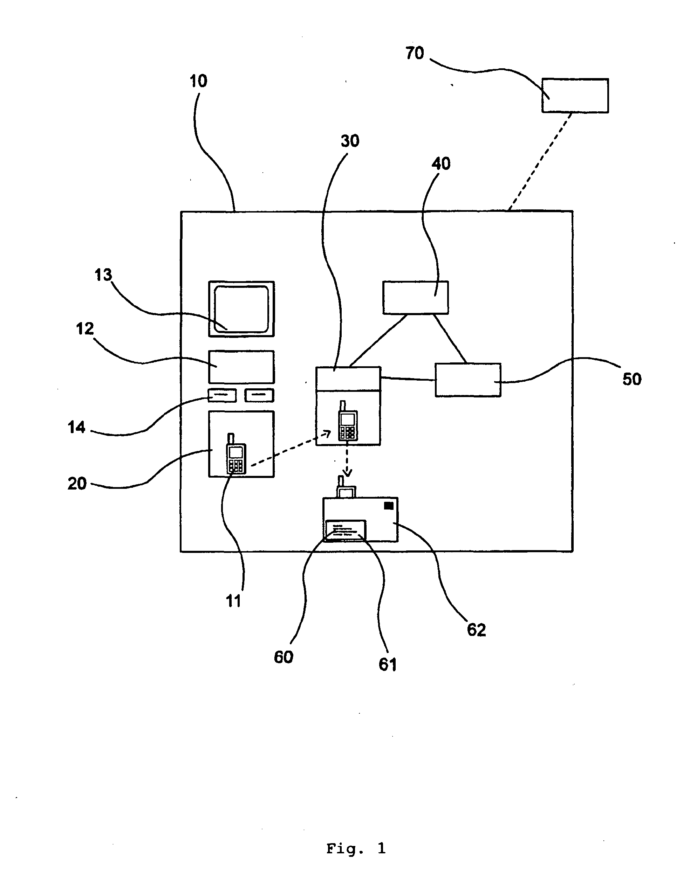

Weitere Vorteile, Besonderheiten und zweckmäßige Weiterbildungen der Erfindung ergeben sich aus den Unteransprüchen und der nachfolgenden Darstellung bevorzugter Ausführungsbeispiele anhand der Abbildung Fig. 1.

In der Fig. 1 ist schematisch ein besonders bevorzugtes Ausführungsbeispiel der erfindungsgemäßen Vorrichtung zur Annahme von elektronischen Geräten dargestellt. Die Vorrichtung besteht vorzugsweise aus einem Gehäuse 10, in welches ein Kunde ein zurückzugebendes elektronisches Gerät 11 durch eine Annahmeöffnung 20 einbringen kann. Die Annahmeöffnung kann beispielsweise als Klappe oder Schleuse ausgebildet sein, durch welche ein Kunde ein Gerät so einbringen kann, dass es bei der Einbringung nicht beschädigt wird.

Die Vorrichtung weist vorzugsweise Eingabe- und Anzeigemittel wie eine Tastatur 12, einen Monitor 13 oder einen Touchscreen zur Führung eines Bedienungsdialogs mit dem Kunden auf. Vorteilhaft ist darüber hinaus ein Ausgabemittel 14 zur Ausgabe eines Beleges oder einer Quittung über die Einlieferung eines elektronischen Gerätes für den Kunden. Die Vorrichtung kann ferner Mittel zur Ausgabe eines Geldbetrages in Form von Bargeld oder einer Wertmarke aufweisen.

Die Vorrichtung kann an einer Vielzahl von Orten aufgestellt werden, wobei vorzugsweise mehrere Vorrichtungen vorgesehen sind. Um eine möglichst hohe Flexibilität zu gewährleisten, befinden sich die Vorrichtungen an für Kunden leicht zugänglichen Orten und sind vorzugsweise 24 Stunden erreichbar. So kann ein Kunde zu jedem für ihn günstigen Zeitpunkt ein elektronisches Gerät einliefern. Besonders vorteilhaft ist die Aufstellung der Vorrichtungen an Orten wie Tankstellen, Warenhäusern oder Supermärkten, welche oft von Kunden frequentiert werden.

Um die Vorrichtung gegen Umwelteinflüsse wie Witterungsbedingungen oder Beschädigungen zu schützen, ist sie wie herkömmliche Verkaufs- oder Warenrücknahmeautomaten je nach Aufstellort witterungsfest und/oder beschädigungssicher ausgeführt. In einem besonders bevorzugten Ausführungsbeispiel der Erfindung ist die Vorrichtung mit einer Vorrichtung anderer Funktion verbunden oder in diese integriert. Beispielsweise hat es sich als vorteilhaft erwiesen, die Vorrichtung in eine elektronische Paketfachanlage zu integrieren. Elektronische Paketfachanlagen werden insbesondere im postalischen Bereich eingesetzt und weisen ein oder mehrere verschließbare Aufbewahrungsfächer auf, welche dazu genutzt werden, Postsendungen an Kunden auszuliefern, welche die Sendungen an der Paketfachanlage zu einem von ihnen wählbaren Zeitpunkt abholen können. Da derartige Paketfachanlagen von Zustellern angefahren werden, um Sendungen einzuliefern oder abzuholen, können mit einer Empfängeradresse versehene elektronische Geräte bei diesen Zustellfahrten ebenfalls mitgenommen und einem postalischen Transport- und Zustellprozess zugeführt werden.

Besonders vorteilhaft ist es, das erfindungsgemäße Verfahren so auszuführen, dass elektronische Geräte 11 in ein Aufbewahrungsfach einer elektronischen Paketfachanlage eingebracht werden. Ferner kann dem betreffenden Fach die Empfängeradresse des Gerätes zugeordnet werden oder mehrere Geräte in einem Fach gesammelt werden.

Bei einer Integration der erfindungsgemäßen Vorrichtung in eine Einrichtung mit anderer Funktion können die beiden Einrichtungen funktional vollständig voneinander getrennt sein oder verschiedene Komponenten werden von beiden Vorrichtungen genutzt. Beispielsweise kann es vorteilhaft sein, eine Annahmeöffnung, Eingabe- oder Anzeigemittel oder eine Steuereinheit für den gemeinsamen Betrieb verschiedener Einrichtungen zu nutzen.

Die Vorrichtung weist ein Detektorsystem 30 auf, dem das elektronische Gerät 11 nach der Einlieferung durch den Kunden zugeführt wird. Das Detektorsystem dient zur Erkennung des Gerätes und kann sich im Innern des Gehäuses oder getrennt von diesem befinden. Für den Fall, dass die Vorrichtung zur Annahme von nur einer Art elektronischer Geräte ausgebildet ist, ist eine Erkennung des Gerätes nicht zwingend erforderlich, wenn davon ausgegangen wird, dass ein Kunde nur eine Art von Gerät einliefert. Es hat sich jedoch als vorteilhaft erwiesen, die Art eines eingelieferten Gerätes zu überprüfen und die Annahme bei einem negativen Prüfergebnis gegebenenfalls zu verweigern.

Zur Erkennung eines Gerätes können verschiedene Techniken eingesetzt werden. Dabei können die Techniken getrennt voneinander oder parallel eingesetzt werden. Welche Technik zur Erkennung eines Gerätes eingesetzt wird, kann automatisch oder durch eine Eingabe des Kunden festgelegt werden. Beispielsweise kann von dem Kunden über das Eingabemittel 12 eingegeben werden, um welche Art von Gerät es sich handelt, woraufhin ein geeignetes Erkennungsverfahren angesteuerbar ist. Von dem Kunden kann ferner eingegeben werden, über welche Identifikationen wie Barcodes oder RFID-Transponder ein Gerät verfügt, so dass die entsprechende Technik zum Einlesen eines Barcodes angesteuert wird. Weist das Gerät keine eindeutige Identifikation auf, können beispielsweise optische Detektionsverfahren verwendet werden.

Befindet sich auf dem Gerät ein Barcode, kann dieser von einem Barcodescanner des Detektorsystems 30 erfasst werden. Dazu kann es erforderlich sein, dass das elektronische Gerät in einer bestimmten Position in das Detektorsystem eingebracht wird. Dies kann beispielsweise durch eine Bildschirmanweisung an den Kunden erfolgen oder das Gerät wird durch Sensoren, Förder- und Drehmechanismen in eine bestimmte Position gebracht, in welcher der Barcode erfasst werden kann. In einem weiteren Ausführungsbeispiel der Erfindung ist das Detektorsystem 30 mit mehreren Scannern ausgestattet, so dass Barcodes in unterschiedlichen Positionen erfasst werden können. In einem weiteren Ausführungsbeispiel der Erfindung ist ein elektronisches Gerät mit einem RFID-Transponder versehen, welcher in dem Detektorsystem 30 ausgelesen wird. Dazu können bekannte Vorrichtungen zum Auslesen von Transpondern verwendet werden.

Die in einem Barcode oder Transponder gespeicherten Informationen werden ausgewertet und wenigstens der Hersteller oder Händler bestimmt, welcher das Gerät zurücknimmt. Dabei kann der Hersteller/Händler direkt aus den Barcodeinformationen ermittelt oder aus einer Datenbank 40 bestimmt werden. Die Datenbank 40 kann sich innerhalb des Gehäuses 10 oder getrennt von diesem befinden. Beispielsweise kann es vorteilhaft sein, eine zentrale Datenbank zu verwenden, welche fortlaufend mit Informationen zu Herstellern, möglichen Geräten und Empfängeradressen aktualisiert wird.

Sowohl bei einer Barcode- als auch bei einer RFID-Kennzeichnung können neben dem Händler oder dem Hersteller weitere Informationen ausgelesen werden. Beispielsweise kann in den erfassten Informationen bereits die Empfängeradresse gespeichert sein, an welche das Gerät versandt werden soll. In diesem Fall kann ein Rechenmittel 50 die Adresse dem Gerät direkt zuordnen und die Adresse wird auf ein Adressmittel 61 in Verbindung mit dem Gerät aufgebracht. Ist in dem Identifikationsmittel des Gerätes keine Empfängeradresse gespeichert, kann diese aus der Datenbank 40 bestimmt werden.

Weist das Gerät kein eindeutiges Identifikationsmittel auf, können zur Erkennung des Gerätes geeignete physikalische Verfahren eingesetzt werden. Beispielsweise können optische Erkennungsverfahren eingesetzt werden, bei denen ein Bild des Gerätes aufgenommen und mit in der Datenbank 40 gespeicherten Bildern elektronischer Geräte verglichen wird. Der Vergleich kann durch weitere Parameter wie das Gewicht des Gerätes, welches durch eine integrierte Waage ermittelt wird, präzisiert werden. Als weiterer Parameter kann das gemessene Volumen des Gerätes in den Vergleich einfließen. Ergibt der Vergleich, dass das Bild des Gerätes mit gespeicherten Daten eines Gerätes übereinstimmt, kann dies dem Kunden auf dem Monitor 13 angezeigt werden, woraufhin dieser den ermittelten Gerätetyp bestätigen kann.

Ferner kann in einem einfachen Ausführungsbeispiel der Erfindung vorgesehen sein, dass das Detektorsystem keine speziellen Verfahren zur Erkennung des Gerätes einsetzt, sondern lediglich mit einem Eingabemittel 12 der Vorrichtung verbunden ist und die Information über die Art eines Gerätes über eine Eingabe durch den Kunden erhalten wird. In diesem Fall kann vorgesehen sein, dass der Kunde direkt den Gerätetyp und oder den Hersteller des Gerätes und gegebenenfalls bereits die Empfängeradresse eingibt.

In einem besonders bevorzugten Ausführungsbeispiel der Erfindung wird das Gerät nach der Erkennung in eine Versandverpackung 62 eingebracht. Dabei handelt es sich bei kleineren Geräten wie Mobiltelefonen, elektronischen Notizbüchern, etc. vorzugsweise um einen Briefumschlag oder ein Paket. Dem Gerät wird eine Empfängeradresse 60 zugeordnet und diese auf ein Adressmittel 61 aufgebracht. Dabei kann es sich beispielsweise um ein Adresslabel handeln, das auf den Briefumschlag aufgeklebt wird. Die Empfängeradresse kann jedoch auch direkt auf den Briefumschlag aufgedruckt werden. Die Empfängeradresse kann als Text in Klarschrift oder als Barcode auf das Adressmittel aufgebracht werden.

Es kann zweckmäßig sein, dass mehrere Geräte mit der gleichen Empfängeradresse in eine gemeinsame Versandverpackung eingebracht werden und die Verpackung mit der gemeinsamen Adresse versehen wird. Dies kann beispielsweise dadurch realisiert werden, dass Geräte mit der gleichen Empfängeradresse zuerst innerhalb der Vorrichtung gesammelt und am Ende eines vorgegebenen Zeitraumes mit der gemeinsamen Empfängeradresse versehen werden. Dazu können die Geräte in einem gemeinsamen Behälter gesammelt und danach in eine Versandverpackung eingebracht werden. Möglich ist ferner die sofortige Sammlung der Geräte in einer gemeinsamen Versandverpackung, welche mit der gemeinsamen Empfängeradresse versehen ist. Um dabei eine möglich große Anzahl verschiedener elektronischer Geräte in der Vorrichtung annehmen zu können, ohne dass die Abmessungen der Vorrichtung zu gross werden, kann es vorteilhaft sein, lediglich für häufig auftretende Empfängeradressen gemeinsame Versandverpackungen und damit auch Sammelbehälter vorzusehen, während andere Geräte jeweils in einzelne Briefumschläge eingebracht werden.

Die Zuordnung der Empfängeradresse 61 durch das Rechenmittel 50 kann sehr variabel erfolgen. Beispielsweise kann vorgesehen sein, dass vorgegebene Geräte an den Hersteller oder den Händler versandt werden. Setzt ein Hersteller für die Rücknahme und/oder Verwertung elektronischer Geräte ein bestimmtes Verwertungsunternehmen ein, können Geräte dieses Herstellers beispielsweise direkt an das Verwertungsunternehmen versandt werden. Dabei kann ferner zwischen Baujahren oder anderen Kriterien unterschieden werden, falls für unterschiedliche Gerätetypen unterschiedliche Verwertungsunternehmen eingesetzt werden. Die verschiedenen Empfängeradressen sind vorzugsweise in der Datenbank 40 hinterlegt und können von dem Rechenmittel 50 einem Gerät zugeordnet werden.

Typischerweise ist die Rücknahme eines elektronischen Gerätes durch die Vorrichtung für den Kunden kostenfrei. Falls für den Kunden Kosten anfallen, sieht die Vorrichtung zweckmäßigerweise Mittel zur Einzahlung eines Geldbetrages vor. Dabei handelt es sich beispielsweise um Mittel zur Einzahlung eines Bargeldbetrages oder ein Kart

Ferner kann es vorgesehen sein, dass der Kunde für die Einlieferung eines Gerätes neben einem Beleg auch einen Geldbetrag erhält. Der zu einem Gerät gehörige Geldbetrag ist vorzugsweise ebenfalls in der Datenbank 40 gespeichert. Der in der Datenbank gespeicherte Geldbetrag kann variieren und beispielsweise in Abhängigkeit von der Geräteart, dem Gerätealter oder bestimmten Sonderaktionen bestimmt werden. Ein Geldbetrag für die Einlieferung eines elektronischen Gerätes kann beispielsweise wie bei Rücknahmesystemen für Getränkebehälter durch Bargeld oder eine Wertmarke ausgegeben werden. In einem Ausführungsbeispiel der Erfindung wird der Geldbetrag dem Konto eines Kunden gutgeschrieben.

Für verschiedene Ausführungsbeispiele der Erfindung kann es zweckmäßig sein, dass die Vorrichtung in Verbindung mit einem Hersteller steht, dessen Geräte an der Vorrichtung angenommen werden. Dies kann mit einer direkten Verbindung zu dem Hersteller oder mit einer indirekten Verbindung über eine zentrale Verwaltungseinheit 70 erfolgen, welche in Verbindung mit mehreren Herstellern steht. Die zentrale Verwaltungseinheit 70 bietet den Vorteil, dass die Vorgänge an mehreren Vorrichtungen zur Annahme von elektronischen Geräten zentral verwaltet werden können. Dazu gehört beispielsweise die Aktualisierung der Datenbank 40 oder die Abrechnung von an der Vorrichtung ausgegebenen Geldbeträgen. Erstattet ein Hersteller einem Kunden einen bestimmten Geldbetrag für die Einlieferung eines elektronischen Gerätes und wird dieser von dem Betreiber der Vorrichtung in Vorleistung an den Kunden ausbezahlt, erfolgt über die zentrale Verwaltungseinheit eine Abrechnung der Leistung mit dem Hersteller. Die Abrechnung der Leistung kann ferner die Erstattung einer Gebühr für den Transport des Gerätes zu dem Hersteller oder einem Verwertungsunternehmen beinhalten. Wird dem Kunden kein Geldbetrag ausgegeben, sondern dieser einem Kundenkonto gutgeschrieben, erfolgt die Abwicklung der Gutschrift mit dem Hersteller vorzugsweise ebenfalls über die zentrale Verwaltungseinheit. Beispielsweise kann dem Kunden beim Kauf eines Mobiltelefons ein Geldbetrag für ein zurückgegebenes Gerät angerechnet werden.

Die zentrale Verwaltungseinheit kann ferner dazu genutzt werden, einem Hersteller Daten über von einer Vorrichtung angenommene Geräte zu übermitteln. Beispielsweise können die Anzahl und/oder die Typen der angenommenen Geräte erfasst und gespeichert werden. Diese und weitere Informationen können dem Hersteller beispielsweise elektronisch als Datei übermittelt werden, so dass dieser über angenommene Geräte, Gerätearten, Standorte der betreffenden Vorrichtungen, etc. informiert ist.

### Bezugszeichenliste:

- 10: Annahmevorrichtung, Gehäuse
- 11: Elektronisches Gerät, Mobiltelefon
- 12: Eingabemittel, Tastatur
- 13: Anzeigemittel, Monitor
- 14: Ausgabemittel für Beleg
- 20: Annahmeöffnung
- 30: Detektorsystem
- 40: Datenbank
- 50: Rechenmittel
- 60: Empfängeradresse
- 61: Adressmittel, Label
- 62: Versandverpackung
- 70: Zentrale Verwaltungseinheit

## Patentansprüche

1. Verfahren zur Annahme von elektronischen Geräten (11) an einer Annahmevorrichtung, **gekennzeichnet durch** folgende Schritte:
- Durchführung einer Erkennung des Gerätes (11) **durch** ein Detektorsystem (30) in Verbindung mit der Vorrichtung;
- Zuordnung des Gerätes (11) zu einer Empfängeradresse (60) **durch** ein Rechenmittel (50), wobei die Empfängeradresse (60) in einer Datenbank (40) gespeichert und einem Gerätehersteller und/oder einem Gerätetyp zugeordnet ist;
- Aufbringen der zugeordneten Empfängeradresse (60) auf ein Adressmittel (61) in Verbindung mit dem Gerät (11);
- Entnahme des Gerätes (11) aus der Vorrichtung und Transport des Gerätes zu der Empfängeradresse (60).

2. Verfahren nach Anspruch 1, **dadurch gekennzeichnet, dass** das elektronische Gerät (11) zur Erkennung in das Gehäuse (10) der Vorrichtung eingebracht wird.

3. Verfahren nach einem oder beiden der Ansprüche 1 und 2, **dadurch gekennzeichnet, dass** die Vorrichtung in eine elektronische Paketfachanlage mit einem oder mehreren verschließbaren Aufbewahrungsfächern integriert ist und das elektronische Gerät (11) in ein Aufbewahrungsfach der Paketfachanlage eingebracht wird.

4. Verfahren nach Anspruch 3, **dadurch gekennzeichnet, dass** dem Aufbewahrungsfach die Empfängeradresse des elektronischen Gerätes (11) zugeordnet wird.

5. Verfahren nach einem oder mehreren der Ansprüche 1 bis 4, **dadurch gekennzeichnet, dass** die Erkennung des elektronischen Gerätes (11) im Detektorsystem (30) über das optische Erfassen eines darauf befindlichen Barcodes erfolgt.

6. Verfahren nach einem oder mehreren der Ansprüche 1 bis 5, **dadurch gekennzeichnet, dass** die Erkennung des elektronischen Gerätes (11) im Detektorsystem (30) über das Auslesen eines am oder im Gerät befindlichen RFID-Transponders erfolgt.

7. Verfahren nach einem oder mehreren der Ansprüche 1 bis 6, **dadurch gekennzeichnet, dass** die Erkennung des elektronischen Gerätes (11) im Detektorsystem (30) über die Auswertung einer manuellen Eingabe durch einen Kunden erfolgt.

8. Verfahren nach einem oder mehreren der Ansprüche 1 bis 7, **dadurch gekennzeichnet, dass** die Erkennung des elektronischen Gerätes (11) im Detektorsystem (30) über die Erstellung eines Bildes des Gerätes und den Vergleich mit Bildern elektronischer Geräte in einer Datenbank (40) erfolgt.

9. Verfahren nach einem oder mehreren der Ansprüche 1 bis 8, **dadurch gekennzeichnet, dass** das elektronische Gerät (11) in der Vorrichtung (10) in eine Versandverpackung (62) eingebracht wird, die ein Adressmittel (61) aufweist, auf welchem die Empfängeradresse (60) aufgebracht wird.

10. Verfahren nach Anspruch 9, **dadurch gekennzeichnet, dass** mehrere elektronische Geräte (11) mit der gleichen zugeordneten Empfängeradresse (60) in der Vorrichtung gesammelt und mit der gemeinsamen Empfängeradresse versehen werden.

11. Verfahren nach Anspruch 10, **dadurch gekennzeichnet, dass** mehrere elektronische Geräte (11) mit der gleichen zugeordneten Empfängeradresse (60) in einem Behälter gesammelt und in eine gemeinsame Versandverpackung (62) eingebracht werden.

12. Verfahren nach Anspruch 3 und 10, **dadurch gekennzeichnet, dass** elektronische Geräte (11) mit der gleichen zugeordneten Empfängeradresse (60) in das gleiche Fach einer elektronischen Paketfachanlage eingebracht werden, in welche die Vorrichtung integriert ist.

13. Verfahren nach einem oder mehreren der Ansprüche 1 bis 12, **dadurch gekennzeichnet, dass** die Vorrichtung (10) nach Annahme eines elektronischen Gerätes (11) einen Geldbetrag ausgibt.

14. Verfahren nach Anspruch 13, **dadurch gekennzeichnet, dass** der Geldbetrag als Bargeld, Wertmarke oder Gutschrift auf dem Konto eines Kunden ausgegeben wird.

15. Verfahren nach Anspruch 14, **dadurch gekennzeichnet, dass** die Gutschrift des Geldbetrages auf dem Konto eines Kunden über eine zentrale Verwaltungseinheit (70) in Verbindung mit der Vorrichtung erfolgt.

16. Verfahren nach einem oder mehreren der Ansprüche 1 bis 15, **dadurch gekennzeichnet, dass** die Vorrichtung (10) nach Annahme eines elektronischen Gerätes (11) einen Beleg erzeugt und diesen über ein Ausgabemittel (14) ausgibt.

17. Verfahren nach einem oder mehreren der Ansprüche 1 bis 16, **dadurch gekennzeichnet, dass** es sich bei dem elektronischen Gerät (11) um ein Mobiltelefon handelt.

18. Vorrichtung zur Annahme von elektronischen Geräten, **gekennzeichnet durch** folgende Merkmale:
- Gehäuse (10) mit einer Annahmeöffnung (20), wobei die Annahmeöffnung in Verbindung mit einem Detektorsystem (30) steht, das Mittel zur Erkennung des Gerätes (11) aufweist,
Datenbank (40) und Rechenmittel (50) in Verbindung mit dem Detektorsystem (30) zur Bestimmung einer Empfängeradresse (60) und Zuordnung der Empfängeradresse zu dem Gerät (11), wobei die Empfängeradresse (60) in einer Datenbank (40) gespeichert und einem Gerätehersteller und/oder einem Gerätetyp zugeordnet ist;
- Mittel zum Aufbringen der Empfängeradresse (60) auf ein Adressmittel (61) in Verbindung mit dem Gerät (11).

19. Vorrichtung nach Anspruch 18, **dadurch gekennzeichnet, dass** die Vorrichtung Eingabemittel (12) zur Eingabe von Informationen durch einen Nutzer, Anzeigemittel (13) zur Anzeige von Informationen für einen Nutzer und/oder Ausgabemittel (14) für die Ausgabe eines Beleges aufweist.

20. Vorrichtung nach einem oder beiden der Ansprüche 18 und 19, **dadurch gekennzeichnet, dass** die Vorrichtung in eine elektronische Paketfachanlage mit einem oder mehreren verschließbaren Aufbewahrungsfächern integriert ist und die Annahmeöffnung (20) durch ein Aufbewahrungsfach der Paketfachanlage gebildet wird.

21. Vorrichtung nach einem oder mehreren der Ansprüche 18 bis 20, **dadurch gekennzeichnet, dass** das Detektorsystem (30) einen oder mehrere Scanner zum Einlesen eines Barcodes umfasst.

22. Vorrichtung nach einem oder mehreren der Ansprüche 18 bis 21, **dadurch gekennzeichnet, dass** das Detektorsystem (30) Mittel zum Auslesen eines RFID-Transponders umfasst.

23. Vorrichtung nach einem oder mehreren der Ansprüche 18 bis 22, **dadurch gekennzeichnet, dass** das Detektorsystem (30) optische Mittel zum Erfassen eines Bildes des Gerätes (11) und Mittel zum Vergleich eines erfassten Bildes eines Gerätes mit in der Datenbank (40) gespeicherten Bildern von elektronischen Geräten umfasst.

24. Vorrichtung nach einem oder mehreren der Ansprüche 18 bis 23, **dadurch gekennzeichnet, dass** die Vorrichtung Mittel zum Einbringen eines elektronischen Gerätes (11) in eine Versandverpackung (62) umfasst.

25. Vorrichtung nach einem oder mehreren der Ansprüche 18 bis 24, **dadurch gekennzeichnet, dass** die Vorrichtung Mittel zum Sammeln von mehreren elektronischen Geräten (11) mit der gleichen zugeordneten Empfängeradresse (60) umfasst.

26. Vorrichtung nach Anspruch 25, **dadurch gekennzeichnet, dass** die Vorrichtung Mittel zum Sammeln der Geräte (11) in einen Behälter und zum Einbringen in eine gemeinsame Versandverpackung (62) umfasst.

27. Vorrichtung nach einem oder mehreren der Ansprüche 18 bis 26, **dadurch gekennzeichnet, dass** es sich bei der Versandverpackung (62) um einen Briefumschlag oder ein Paket handelt.

28. Vorrichtung nach einem oder mehreren der Ansprüche 18 bis 27, **dadurch gekennzeichnet, dass** die Vorrichtung Mittel zur Ausgabe eines Geldbetrages umfasst.

29. Vorrichtung nach einem oder mehreren der Ansprüche 18 bis 28, **dadurch gekennzeichnet, dass** die Vorrichtung in Verbindung mit einer zentralen Verwaltungseinheit (70) steht.

## Claims

1. A method for accepting electronic equipment (11) at an acceptance device, **characterized by** the following steps:
- carrying out an identification of the equipment (11) by a detector system (30) that is used in conjunction with the device;
- associating the equipment (11) with a recipient address (60) by a computing means (50), whereby the recipient address (60) is stored in a database (40) and associated with an equipment manufacturer and/or with a type of equipment;
- applying the associated recipient address (60) onto an addressing means (61) that is used in conjunction with the equipment (11);
- removing the equipment (11) from the device and transporting the equipment to the recipient address (60).

2. The method according to claim 1, **characterized in that** the electronic equipment (11) is placed into the housing (10) of the device for purposes of being identified.

3. The method according to one or both of claims 1 or 2, **characterized in that** the device is integrated into an electronic parcel compartment facility having one or more lockable storage compartments, and the electronic equipment (11) is placed into a storage compartment of the parcel compartment facility.

4. The method according to claim 3, **characterized in that** the recipient address of the electronic equipment (11) is associated with the storage compartment.

5. The method according to one or more of claims 1 to 4, **characterized in that** the electronic equipment (11) is identified in the detector system (30) by optically detecting a barcode located on it.

6. The method according to one or more of claims 1 to 5, **characterized in that** the electronic equipment (11) is identified in the detector system (30) by reading out an RFID transponder located on or in the equipment.

7. The method according to one or more of claims 1 to 6, **characterized in that** the electronic equipment (11) is identified in the detector system (30) by evaluating a manual input by a customer.

8. The method according to one or more of claims 1 to 7, **characterized in that** the electronic equipment (11) is identified in the detector system (30) by generating an image of the equipment and comparing it to images of electronic equipment in a database (40).

9. The method according to one or more of claims 1 to 8, **characterized in that** the electronic equipment (11) is placed into the device (10) in mailing packaging (62) having an addressing means (61) onto which the recipient address (60) is applied.

10. The method according to claim 9, **characterized in that** several pieces of electronic equipment (11) having the same associated recipient address (60) are collected in the device and are labeled with the same recipient address.

11. The method according to claim 10, **characterized in that** several pieces of electronic equipment (11) having the same associated recipient address (60) are collected in a container and placed into the same mailing packaging (62).

12. The method according to claims 3 and 10, **characterized in that** pieces of electronic equipment (11) having the same associated recipient address (60) are placed into the same compartment of an electronic parcel compartment facility into which the device is integrated.

13. The method according to one or more of claims 1 to 12, **characterized in that**, after accepting a piece of electronic equipment (11), the device (10) dispenses a monetary sum.

14. The method according to claim 13, **characterized in that** the monetary sum is dispensed in the form of cash, a voucher or a credit to the account of a customer.

15. The method according to claim 14, **characterized in that** the monetary sum is credited to the account of a customer via a central administration unit (70) that is in communication with the device.

16. The method according to one or more of claims 1 to 15, **characterized in that**, after accepting a piece of electronic equipment (11), the device (10) generates a receipt and dispenses it via an output means (14).

17. The method according to one or more of claims 1 to 16, **characterized in that** the piece of electronic equipment (11) is a mobile phone.

18. A device for accepting electronic equipment, **characterized by** the following features:
- a housing (10) with an acceptance opening (20), whereby the acceptance opening is connected to a detector system (30) that has means to identify the equipment (11),
- a database (40) and computing means (50) in communication with the detector system (30) for determining a recipient address (60) and associating the recipient address with the equipment (11), whereby the recipient address (60) is stored in a database (40) and is associated with equipment manufacturer and/or with a type of equipment;
- means for applying the recipient address (60) onto an addressing means (61) that is used in conjunction with the equipment (11).

19. The device according to claim 18, **characterized in that** the device has input means (12) with which a user can input information, also display means (13) for displaying information for a user and/or output means (14) for issuing a receipt.

20. The device according to one or both of claims 18 and 19, **characterized in that** the device is integrated into an electronic parcel compartment facility having one or more lockable storage compartments, and the acceptance opening (20) consists of a storage compartment of the electronic parcel compartment facility.

21. The device according to one or more of claims 18 to 20, **characterized in that** the detector system (30) has one or more scanners that serve to read in a barcode.

22. The device according to one or more of claims 18 to 21, **characterized in that** the detector system (30) has means to read out an RFID transponder.

23. The device according to one or more of claims 18 to 22, **characterized in that** the detector system (30) has optical means to acquire an image of the equipment (11), and means to compare the acquired image of the equipment to images of electronic equipment stored in the database (40).

24. The device according to one or more of claims 18 to 23, **characterized in that** the device has means for placing electronic equipment (11) into mailing packaging (62).

25. The device according to one or more of claims 18 to 24, **characterized in that** the device has means to collect several pieces of electronic equipment (11) having the same associated recipient address (60).

26. The device according to claim 25, **characterized in that** the device has means to collect the equipment (11) in a container and to place them into the same mailing packaging (62).

27. The device according to one or more of claims 18 to 26, **characterized in that** the mailing packaging (62) is an envelope or a parcel.

28. The device according to one or more of claims 18 to 27, **characterized in that** the device comprises means to dispense a monetary sum.

29. The device according to one or more of claims 18 to 28, **characterized in that** the device is in communication with a central administration unit (70).

## Revendications

1. Procédé de réception d'appareils électroniques (11) à un dispositif de réception, **caractérisé par** les étapes suivantes :
- exécution d'une reconnaissance de l'appareil (11) par un système de détection (30) en liaison avec le dispositif ;
- association de l'appareil (11) à une adresse de destinataire (60) par un moyen de calcul (50), l'adresse de destinataire (60) étant stockée dans une base de données (40) et étant associée à un fabricant d'appareil et/ou à un type d'appareil ;
- apposition de l'adresse de destinataire associée (60) sur un support d'adresse (61) en liaison avec l'appareil (11) ;
- retrait de l'appareil (11) hors du dispositif et transport de l'appareil vers l'adresse de destinataire (60).

2. Procédé selon la revendication 1, **caractérisé en ce que**, pour être reconnu, l'appareil électronique (11) est introduit dans le boîtier (10) du dispositif.

3. Procédé selon l'une ou les deux revendications 1 et 2, **caractérisé en ce que** le dispositif est intégré dans une installation électronique équipée de casiers pour paquets et comportant un ou plusieurs casiers de dépôt pouvant être fermés et **en ce que** l'appareil électronique (11) est introduit dans un casier de dépôt de l'installation équipée de casiers pour paquets.

4. Procédé selon la revendication 3, **caractérisé en ce que** l'adresse de destinataire de l'appareil électronique (11) est associée au casier de dépôt.

5. Procédé selon l'une ou plusieurs des revendications 1 à 4, **caractérisé en ce que** la reconnaissance de l'appareil électronique (11) dans le système de détection (30) s'effectue via la détection optique d'un code-barres qui se trouve dessus.

6. Procédé selon l'une ou plusieurs des revendications 1 à 5, **caractérisé en ce que** la reconnaissance de l'appareil électronique (11) dans le système de détection (30) s'effectue via la lecture d'un transpondeur RFID situé sur ou dans l'appareil.

7. Procédé selon l'une ou plusieurs des revendications 1 à 6, **caractérisé en ce que** la reconnaissance de l'appareil électronique (11) dans le système de détection (30) s'effectue via l'évaluation d'une saisie manuelle par un client.

8. Procédé selon l'une ou plusieurs des revendications 1 à 7, **caractérisé en ce que** la reconnaissance de l'appareil électronique (11) dans le système de détection (30) s'effectue par l'intermédiaire de la création d'une image de l'appareil et de la comparaison avec des images d'appareils électroniques dans une base de données (40).

9. Procédé selon l'une ou plusieurs des revendications 1 à 8, **caractérisé en ce que** l'appareil électronique (11), dans le dispositif (10), est introduit dans un emballage d'expédition (62) qui comporte un support d'adresse (61) sur lequel est apposée l'adresse de destinataire (60).

10. Procédé selon la revendication 9, **caractérisé en ce que** plusieurs appareils électroniques (11) ayant la même adresse de destinataire associée (60) sont collectés dans le dispositif et pourvus de l'adresse de destinataire commune.

11. Procédé selon la revendication 10, **caractérisé en ce que** plusieurs appareils électroniques (11) ayant la même adresse de destinataire associée (60) sont collectés dans un récipient et introduits dans un emballage d'expédition commun (62).

12. Procédé selon les revendications 3 et 10, **caractérisé en ce que** des appareils électroniques (11) ayant la même adresse de destinataire associée (60) sont introduits dans le même casier d'une installation électronique équipée de casiers pour paquets dans laquelle le dispositif est intégré.

13. Procédé selon l'une ou plusieurs des revendications 1 à 12, **caractérisé en ce que** le dispositif (10) délivre une somme d'argent après la réception d'un appareil électronique (11).

14. Procédé selon la revendication 13, **caractérisé en ce que** la somme d'argent est délivrée sous la forme d'argent en espèces, d'une marque de valeur ou d'un crédit porté sur le compte d'un client.

15. Procédé selon la revendication 14, **caractérisé en ce que** la somme d'argent est créditée sur le compte d'un client via une unité de gestion centrale (70) en liaison avec le dispositif.

16. Procédé selon l'une ou plusieurs des revendications 1 à 15, **caractérisé en ce que** le dispositif (10), après la réception d'un appareil électronique (11), génère un justificatif et le délivre par l'intermédiaire d'un moyen de production en sortie (14).

17. Procédé selon l'une ou plusieurs des revendications 1 à 16, **caractérisé en ce que** l'appareil électronique (11) est un téléphone mobile.

18. Dispositif de réception d'appareils électroniques, **caractérisé par** les caractéristiques suivantes :
- un boîtier (10) présentant une ouverture de réception (20), l'ouverture de réception étant en liaison avec un système de détection (30) qui comporte des moyens de reconnaissance de l'appareil (11) ;
- une base de données (40) et des moyens de calcul (50) en liaison avec le système de détection (30) pour déterminer une adresse de destinataire (60) et pour associer l'adresse de destinataire à l'appareil (11), l'adresse de destinataire (60) étant stockée dans une base de données (40) et associée à un fabricant d'appareil et/ou à un type d'appareil ;
- des moyens pour apposer l'adresse de destinataire (60) sur un support d'adresse (61) en liaison avec l'appareil (11).

19. Dispositif selon la revendication 18, **caractérisé en ce que** le dispositif comporte des moyens de saisie (12) pour la saisie d'informations par un utilisateur, des moyens d'affichage (13) pour l'affichage d'informations pour un utilisateur et/ou des moyens de production en sortie (14) pour la production en sortie d'un justificatif.

20. Dispositif selon l'un ou les deux revendications 18 et 19, **caractérisé en ce que** le dispositif est intégré dans une installation électronique équipée de casiers pour paquets et comportant un ou plusieurs casiers de dépôt pouvant être fermés et **en ce que** l'ouverture de réception (20) est formée par un casier de dépôt de l'installation équipée de casiers pour paquets.

21. Dispositif selon l'un ou plusieurs des revendications 18 à 20, **caractérisé en ce que** le système de détection (30) comprend un ou plusieurs scanners pour la lecture d'un code-barres.

22. Dispositif selon l'un ou plusieurs des revendications 18 à 21, **caractérisé en ce que** le système de détection (30) comprend des moyens de lecture d'un transpondeur RFID.

23. Dispositif selon l'un ou plusieurs des revendications 18 à 22, **caractérisé en ce que** le système de détection (30) comprend des moyens optiques pour enregistrer une image de l'appareil (11) et des moyens pour comparer une image enregistrée d'un appareil à des images d'appareils électroniques stockées dans la base de données (40).

24. Dispositif selon l'un ou plusieurs des revendications 18 à 23, **caractérisé en ce que** le dispositif comprend des moyens pour introduire un appareil électronique (11) dans un emballage d'expédition (62).

25. Dispositif selon l'un ou plusieurs des revendications 18 à 24, **caractérisé en ce que** le dispositif comprend des moyens pour collecter plusieurs appareils électroniques (11) ayant la même adresse de destinataire associée (60).

26. Dispositif selon la revendication 25, **caractérisé en ce que** le dispositif comprend des moyens pour collecter les appareils (11) dans un récipient et pour les introduire dans un emballage d'expédition commun (62).

27. Dispositif selon l'un ou plusieurs des revendications 18 à 26, **caractérisé en ce que** l'emballage d'expédition (62) est une enveloppe ou un paquet.

28. Dispositif selon l'un ou plusieurs des revendications 18 à 27, **caractérisé en ce que** le dispositif comprend des moyens pour délivrer une somme d'argent.

29. Dispositif selon l'un ou plusieurs des revendications 18 à 28, **caractérisé en ce que** le dispositif est en liaison avec une unité de gestion centrale (70).
